(19) Europäisches Patentamt / European Patent Office / Office européen des brevets

(11) **EP 1 807 300 B1**

(12) **EUROPÄISCHE PATENTSCHRIFT**

(45) Veröffentlichungstag und Bekanntmachung des Hinweises auf die Patenterteilung:
**28.03.2012   Patentblatt 2012/13**

(21) Anmeldenummer: **04804680.9**

(22) Anmeldetag: **03.12.2004**

(51) Int Cl.:
**B62D 15/02** *(2006.01)*    **B62D 6/00** *(2006.01)*

(86) Internationale Anmeldenummer:
**PCT/EP2004/053272**

(87) Internationale Veröffentlichungsnummer:
**WO 2005/054040 (16.06.2005 Gazette 2005/24)**

(54) **VERFAHREN UND VORRICHTUNG ZUM UNTERSTÜTZEN EINES FAHRZEUGBEDIENERS BEIM STABILISIEREN EINES FAHRZEUGS**

METHOD AND DEVICE FOR ASSISTING A MOTOR VEHICLE SERVER FOR THE VEHICLE STABILISATION

PROCEDE ET DISPOSITIF PERMETTANT D'ASSISTER UN SERVEUR DE VEHICULE LORS DE LA STABILISATION D'UN VEHICULE

(84) Benannte Vertragsstaaten:
**DE FR**

(30) Priorität: **04.12.2003   DE 10357045**

(43) Veröffentlichungstag der Anmeldung:
**18.07.2007   Patentblatt 2007/29**

(73) Patentinhaber: **Continental Teves AG & Co. oHG**
**60488 Frankfurt am Main (DE)**

(72) Erfinder:
• **GALKOWSKI, Fred**
  **55288 Udenheim (DE)**
• **BERTHOLD, Thomas**
  **64293 Darmstadt (DE)**
• **RASTE, Thomas**
  **61440 Oberursel (DE)**
• **BAUER, Urs**
  **65934 Frankfurt am Main (DE)**

(56) Entgegenhaltungen:
EP-A- 1 125 823    EP-A- 1 348 610
WO-A-02/074607    DE-A1- 10 032 340
DE-A1- 10 039 782    DE-A1- 10 115 018
DE-A1- 19 912 169

## Beschreibung

Die Erfindung betrifft ein Verfahren zum Unterstützen eines Fahrzeugsbedieners bei einem Einstellen eines Solllenkwinkels an lenkbaren Rädern des Fahrzeugs zum Stabilisieren des Fahrzeugs, bei dem ein Lenkstrang des Fahrzeugs mit einem Zusatzlenkmoment beaufschlagt wird, das in Abhängigkeit einer Abweichung zwischen einem Solllenkwinkel und einem momentanen Lenkwinkel bestimmt wird.

Die Erfindung betrifft zudem eine Vorrichtung zum Unterstützen eines Fahrzeugbedieners bei einem Einstellen eines Solllenkwinkels an wenigstens einem lenkbaren Rad des Fahrzeugs, beinhaltend ein Mittel zum Einstellen eines Zusatzlenkmoments, das von einer Regeleinheit in Abhängigkeit einer Abweichung zwischen dem Solllenkwinkel und einem momentanen Lenkwinkel des Fahrzeugs bestimmt wird.

Beim Bremsen auf einer inhomogenen Fahrbahn mit unterschiedlichen Reibwerten auf der linken und rechten Fahrzeuglängsseite können asymmetrische Bremskräfte auftreten, die ein Giermoment bewirken, welches das Fahrzeug in eine Drehbewegung um seine Hochachse versetzt. Um dabei ein Schleudern des Fahrzeugs zu verhindern, muss der Fahrer durch geeignete Lenkbewegungen ein kompensierendes Giermoment aufbauen, das dem durch die asymmetrischen Bremskräfte verursachten Moment entgegenwirkt. Ein Blockieren der Räder sollte dabei auch auf der Fahrzeugseite mit dem niedrigen Reibwert vermieden werden, da die mit dem Blockieren einhergehende starke Verminderung der übertragbaren Seitenführungskraft eines Rades den Aufbau des erforderlichen Kompensationsmoments verhindern kann. Die betrachtete Situation stellt somit hohe Anforderungen, die insbesondere unerfahrene Fahrer regelmäßig überfordern.

Bei Fahrzeugen mit einem Anti-Blockiersystem (ABS) wird das Blockieren der Räder durch einen Regler verhindert. In Situationen der genannten Art verfolgt eine üblicherweise angewandte Regelstrategie dabei einerseits das Ziel, das Fahrzeug durch einen möglichst hohen Bremsdruck in den Radbremsen auf der Fahrzeugseite mit dem höheren Reibwert wirkungsvoll zu verzögern. Andererseits soll der Fahrer nicht durch ein aufgrund von unterschiedlichen Bremskräften auf der Hoch- bzw. Niedrigreibwertseite verursachtes Giermoment überfordert werden. Daher erfolgt die Regelung in den betrachteten Situationen so, dass an der Vorderachse des Fahrzeugs eine Differenz zwischen den Bremsdrücken auf der Hoch- und der Niedrigreibwertseite nur langsam aufgebaut wird, um dem Fahrer so ausreichend Zeit zum Ausführen stabilisierender Lenkbewegungen zu geben. Zudem wird der Bremsdruck an beiden Radbremsen der Hinterachse auf den für die Niedrigreibwertseite zugelassenen Wert begrenzt ("select low"), damit an der Hinterachse ausreichend Seitenführungskraft aufgebaut werden kann, um das Fahrzeug durch Lenkeingriffe zu stabilisieren.

Die dargestellten Maßnahmen erlauben dem Fahrer eine einfachere Beherrschung des Fahrzeugs, das Reibwertpotenzial der Hochreibwertseite wird jedoch nicht optimal zur Verzögerung des Fahrzeugs ausgenutzt. Es ist daher vorgeschlagen worden, den Lenkwinkel der lenkbaren Räder des Fahrzeugs in die Fahrstabilitätsregelung einzubeziehen und durch einen Regler und einen geeigneten von diesem angesteuerten Aktuator einen Lenkwinkel einzustellen, der das notwendige Kompensationsgiermoment bewirkt. Das Fahrzeug kann damit schneller und zuverlässiger stabilisiert werden, so dass eine "aggressivere" ABS-Regelstrategie gewählt werden kann, die einen wirkungsvolleren Bremseingriff und damit eine raschere Verzögerung des Fahrzeugs ermöglicht. Ferner wird vermieden, dass das Fahrzeug durch ungenügende oder fehlgerichtete Lenkeingriffe des Fahrers ins Schleudern gerät.

Die europäische Patentanmeldung EP 1125823 A1 offenbart ein Verfahren zum Steuern einer elektrischen Servolenkung, die ein Lenkgestänge, ein mit einer Lenksäule verbundenes Lenkrad und einen funktional mit dem Lenkgestänge verbundenen Elektromotor aufweist, bei der eine Winkelgeschwindigkeit des Elektromotors gemessen wird, ein Drehmomentsignal als Funktion der gemessenen Winkelgeschwindigkeit geschätzt wird, und ein Motorsteuerungssignal in Abhängigkeit des geschätzten Drehmomentsignals bestimmt, wobei das Motorsteuerungssignal dem Elektromotor zugeführt wird, um ein unterstützendes Lenkmoment zu erzeugen. In einer bevorzugten Ausführungsform der Erfindung wird das unterstützende Lenkmoment auf der Grundlage eines Fahrerdrehmoments und der Fahrzeuggeschwindigkeit ermittelt.

Aus der internationalen Patentanmeldung WO 02/074638 A1 ist es bekannt, den Lenkstrang des Fahrzeugs mit einem Zusatzlenkmoment zu beaufschlagen, das aus einer Abweichung zwischen dem von dem Fahrer eingestellten Lenkwinkel und einer Lenkwinkelanforderung ermittelt wird und durch eine elektronische Servolenkung eingestellt wird. Die Lenkwinkelanforderung wird dabei aus dem geschätzten, auf das Fahrzeug wirkenden Giermoment, aus der Gierrate des Fahrzeugs und aus der Querbeschleunigung des Fahrzeugs ermittelt.

Hierdurch wird der durch die Regeleinheit bestimmt Lenkwinkel nicht direkt eingestellt, sondern der Fahrer wird durch das Zusatzlenkmoment beim Einstellen des Lenkwinkels unterstützt.

Bei einer derartigen Regelung ergibt sich jedoch das Problem, dass das Zusatzlenkmoment bei Bremsungen auf einer Fahrbahn mit niedrigen Reibwerten zu große Werte annimmt, wenn die Regelung auf hohe Reibwerte abgestimmt ist oder - wenn die Regelung auf niedrige Reibwerte abgestimmt ist- bei Bremsungen auf einer Fahrbahn mit hohen Reibwerten zu gering ist, um den Fahrer wirkungsvoll zu unterstützen. Dies kann zu fehlerhaften oder ungenügenden Lenkeingriffen des Fahrers führen und wird von diesem oftmals als unkomfortabel wahrgenommen

Der vorliegenden Erfindung liegt die Aufgabe zugrunde, ein Verfahren gleicher Art so zu verbessern, dass das Fahrzeug für eine Vielzahl möglicher Fahrsituationen zuverlässiger und komfortabler stabilisiert werden kann.

Erfindungsgemäß wird diese Aufgabe durch ein Verfahren nach dem Patentanspruch 1 sowie durch eine Vorrichtung nach dem Patentanspruch 9 gelöst.

Zweckmäßige Weiterbildungen des Verfahrens und der Vorrichtung sind Gegenstand der Unteransprüche.

Die Erfindung stellt ein Verfahren zum Unterstützen eines Fahrzeugbedieners bei einem Einstellen eines Solllenkwinkels an lenkbaren Rädern eines Fahrzeugs zur Stabilisierung des Fahrzeugs, bei dem ein Lenkstrang des Fahrzeugs mit einem Zusatzlenkmoment beaufschlagt wird, das in Abhängigkeit einer Abweichung zwischen dem Solllenkwinkel und einem momentanen Lenkwinkel gebildet wird, bereit, das sich dadurch auszeichnet, dass ein Wert eines auf den Lenkstrang wirkenden Lastmoments geschätzt wird, und dass das Zusatzlenkmoment in Abhängigkeit des geschätzten Wertes für das Lastmoment ermittelt wird.

Bei dem Lastmoment handelt es sich dabei insbesondere um ein Reifenrückstellmoment, welches auf den Lenkstrang des Fahrzeugs wirkt und durch Seitenführungs- bzw. Querkräfte an den Reifen der lenkbaren Räder des Fahrzeugs verursacht wird.

Durch die Berücksichtigung des Lastmoments wird es dabei ermöglicht, den momentanen Fahrbahnzustand bei den Regeleingriffen zu berücksichtigen. Insbesondere ergibt sich dabei ein unterschiedliches Lastmoment für verschiedene Reibwerte, so dass der Wert des Zusatzlenkmoments den Reibwerten angepasst werden kann. Liegt eine inhomogene Fahrbahn vor, ermöglicht es das erfindungsgemäße Verfahren zudem vorteilhaft, das Lastmoment zu berücksichtigen, dass in der Summe durch die Reifen verursacht wird, die sich auf unterschiedlichen Reibwerten befinden.

In einer vorteilhaften Ausgestaltung der Erfindung ist es dabei vorgesehen, dass das Zusatzlenkmoment aus wenigstens zwei additiven Anteilen gebildet wird, wobei ein erster Anteil in Abhängigkeit der Abweichung zwischen dem Solllenkwinkel und dem momentanen Lenkwinkel bestimmt wird, und wobei ein zweiter Anteil in Abhängigkeit des geschätzten Wertes des Lastmoments ermittelt wird.

Dies erlaubt es, den aus der Lenkwinkelabweichung abgeleiteten Regelanteil des Zusatzlenkmoments und den aus dem Lastmoment ermittelten Anteil, der als Störanteil angesehen werden kann, unabhängig voneinander zu bestimmen, so dass ein verwendeter Lenkwinkelregler sehr einfach und zuverlässig ausgeführt werden kann.

Das Lastmoment wird dabei in einer besonders zweckmäßigen Ausführungsform der Erfindung durch einen Störgrößenbeobachter geschätzt.

In einer weiteren vorteilhaften Ausführungsform der Erfindung ist es vorgesehen, dass ein Anteil des Solllenkwinkels in einem inversen Fahrzeugmodell in Abhängigkeit eines Störgiermoments bestimmt wird.

Damit kann der Solllenkwinkel so bestimmt werden, dass er eine Kompensation des Störgiermoments bewirkt, das durch unterschiedliche Bremskräfte bei einem Bremsvorgang auf einer inhomogenen Fahrbahn hervorgerufen wird.

Es hat sich dabei jedoch gezeigt, dass das Fahrzeug durch ein Einstellen dieses Anteils des Solllenkwinkels nicht immer zuverlässig stabilisiert werden kann. Dies kann beispielsweise auf Fehler bei der Bestimmung des Störgiermoments zurückgeführt werden.

In einer bevorzugten Ausgestaltung der Erfindung wird daher ein weiterer Anteil des Solllenkwinkels in Abhängigkeit einer Abweichung zwischen einem Gierwinkel des Fahrzeugs und einem vorgegebenen Wert des Gierwinkels bestimmt.

Durch diesen Anteil des Solllenkwinkels kann die Reaktion des Fahrzeugs auf Lenkwinkeländerungen berücksichtigt werden, um das Fahrzeug besonders wirkungsvoll zu stabilisieren. Die Fahrzeugreaktion anhand des Gierwinkels zu charakterisieren, hat sich dabei als besonders vorteilhaft erwiesen.

Insbesondere bei einem Bremsvorgang auf einer inhomogenen Fahrbahn während einer Kurvenfahrt ist es vorteilhaft vorgesehen, dass ein Anteil des Solllenkwinkels ein geschätzter Kurslenkwinkel ist.

In einer weiteren vorteilhaften Ausgestaltung der Erfindung ist es vorgesehen, dass ein Anteil des Zusatzlenkmoments einen vorgegebenen Betrag hat. Dieser Anteil wird unabhängig von dem Betrag des Solllenkwinkels bestimmt.

Vorzugsweise wird der Anteil des Zusatzlenkmoments mit dem vorgegebenen Betrag für eine vorbestimmte Zeitdauer nach dem Beginn eines Bremsvorgangs auf einer inhomogenen Fahrbahn eingestellt und dann zurückgenommen.

Durch diesen Anteil des Zusatzlenkmoments kann dem Fahrer des Fahrzeugs ein haptisches Signal über das Vorliegen einer Bremssituation auf einer inhomogenen Fahrbahn gegeben werden. Dieses Signal wird zurückgenommen, um dem Fahrer ein einfaches Einstellen des Solllenkwinkels anhand von Regelanteilen des Zusatzlenkmoments zu ermöglichen.

Die Erfindung stellt überdies eine vorteilhafte Vorrichtung zur Durchführung des erfindungsgemäßen Verfahrens bereit.

Die Vorrichtung zum Unterstützen eines Fahrzeugbedieners bei einem Einstellen eines Solllenkwinkels an wenigstens einem lenkbaren Rad des Fahrzeugs zur Stabilisierung des Fahrzeugs, beinhaltend ein Mittel zum Einstellen eines Zusatzlenkmoments, das von einer Regeleinheit in Abhängigkeit einer Abweichung zwischen dem Solllenkwinkel und einem momentanen Lenkwinkel des Fahrzeugs bestimmt wird, zeichnet sich dadurch aus, dass ein Schätzmittel zum Schätzen eines auf den Lenkstrang wirkenden Lastmoments aus Signalen von in den Lenkstrang eingebrachten Sensoren enthalten ist, wobei das Schätzmittel mit einem weiteren Mittel verbunden ist, das aus in dem Schätzmittel ermittelten Schätzergebnissen für das Lastmoment einen Anteil des Zusatzlenkmoments ermittelt, das durch einen Addierer zu dem durch die Regeleinheit ermittelten Lenkmoment addiert wird, und wobei das Mittel zum Einstellen des Zusatzlenkmoments von dem Ausgangssignal des Addierers angesteuert wird.

Bei den Sensoren handelt es sich in einer zweckmäßigen Ausführungsform der Erfindung wenigstens um einen Lenkwinkelsensor, um einen Sensor zum Messen eines den Fahrerlenkwunsch repräsentierenden Handlenkmoments und um einen Sensor zum Messen des Zusatzlenkmoments.

In einer besonders bevorzugten Ausführungsform der Erfindung ist das Schätzmittel zum Schätzen des Lastmoments als Störgrößenbeobachter ausgebildet.

In einer weiteren vorteilhaften Ausgestaltung der Erfindung handelt es sich bei dem Mittel zum Einstellen des Zusatzlenkmoments um einen Servomotor einer elektrischen Servolenkung.

Dieser ist in einer Vielzahl von Fahrzeugen bereits vorgesehen, so dass die Vorrichtung in diesen Fahrzeugen in besonders einfacher Weise bereitgestellt werden kann.

In einer ebenfalls vorteilhaften Ausgestaltung der Erfindung handelt es sich bei dem Mittel zum Einstellen des Zusatzlenkmoments um eine hydraulische Servolenkung.

In einer noch weiteren vorteilhaften Ausgestaltung der Erfindung handelt es sich bei dem Mittel zum Einstellen des Zusatzlenkmoments um eine Steer-by-Wire-Lenkung.

Zum Einsteuern des haptischen Signals über das Vorliegen einer Bremssituation auf einer inhomogenen Fahrbahn weist die Vorrichtung in einer noch weiteren vorteilhaften Ausführungsform ein Vorsteuermittel auf, das mit dem Addierer verbunden ist, und welches dem Addierer für eine vorbestimmte Zeitdauer ein Zusatzlenkmoment mit einem vorbestimmten Wert übergibt.

Zum Erkennen eines Bremsvorgangs auf einer inhomogenen Fahrbahn und zum Aktivieren der Fahrerunterstützung verfügt die Vorrichtung in einer ebenfalls bevorzugten Ausgestaltung über Erkennungsmittel zum Erkennen eines Fahrzustand, welche in Abhängigkeit eines erkannten Fahrzustandes ein Aktivierungssignal an einen Multiplikator übermitteln, der das Aktivierungssignal mit dem ermittelten Zusatzlenkmoment multipliziert.

Zweckmäßigerweise nimmt das Aktivierungssignal den Wert 1 an, wenn durch das Erkennungsmittel ein Bremsvorgang auf einer inhomogenen Fahrbahn ermittelt wird.

Obwohl zweckmäßige und vorteilhafte Ausführungsformen der Erfindung eine Fahrerunterstützung während eines Bremsvorgangs auf einer inhomogenen Fahrbahn vorsehen, ist die Erfindung keineswegs auf diese Anwendungen beschränkt. Sie kann ebenso vorteilhaft im Rahmen einer Anwendung eingesetzt werden, bei der das Zusatzlenkmoment während einer anderen instabilen Fahrsituation, beispielsweise während einer Über- oder Untersteuersituation aufgebracht wird.

Weitere Vorteile und zweckmäßige Weiterbildungen der Erfindung ergeben sich aus der nachfolgenden Darstellung bevorzugter Ausführungsbeispiele anhand der Figuren.

Von den Figuren zeigt:

Fig. 1   eine schematische Darstellung eines Regelsystems zum Ermitteln eines Zusatzlenkmoments,

Fig. 2   ein Blockschaltbild mit einer Übersicht über ein Regelsystem zum Ermitteln eines Zusatzlenkmoments bei einem Bremsvorgang auf inhomogener Fahrbahn,

Fig. 3   eine Ausgestaltung eines Blocks des in dem in der Figur 2 dargestellten Blockschaltbildes zum Bestimmen eines Solllenkwinkels,

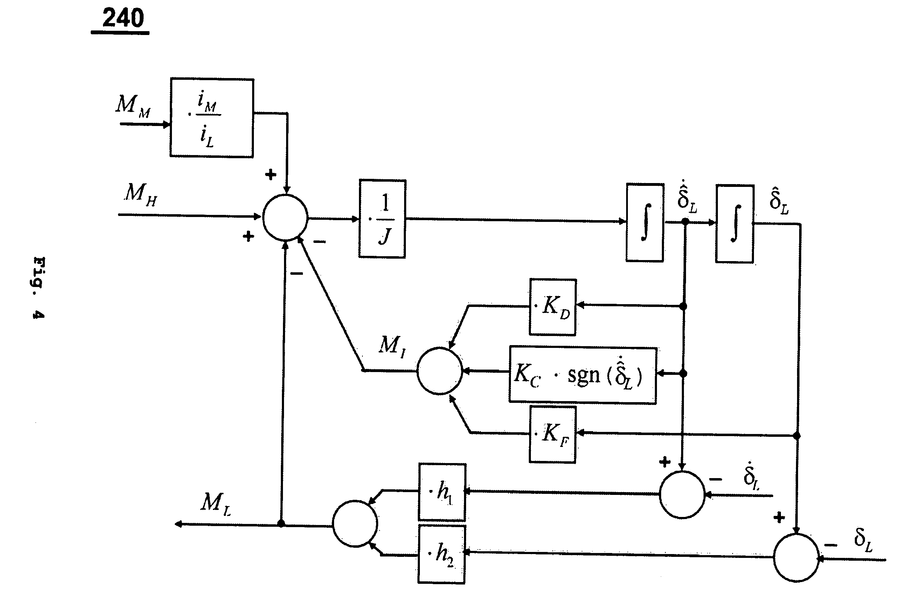

Fig. 4   eine erste Ausgestaltung eines Blocks des in dem in der Figur 2 dargestellten Blockschaltbildes zum Schätzen des Lastmoments,

Fig. 5   eine zweite Ausgestaltung eines Blocks des in dem in der Figur 2 dargestellten Blockschaltbildes zum Schätzen des Lastmoments,

Fig. 6   eine Ausgestaltung eines Lenkwinkelreglers,

Fig. 7   eine erste Ausgestaltung eines Blocks des in dem in der Figur 2 dargestellten Blockschaltbildes zur Momentenvorsteuerung und

Fig. 8   eine Blockschaltbild, das die Limitierung des Zusatzlenkmoments beschreibt.

Es wird von einem zweiachsigen, vierrädrigen Kraftfahrzeug mit lenkbaren Rädern an einer Vorderachse ausgegangen. Die Lenkung des Fahrzeugs ist vorzugsweise als Zahnstangenlenkung ausgeführt, die mit einer elektrischen Servolenkung ausgerüstet ist. Im konventionellen Betrieb der Servolenkung wird der Lenkstrang durch einen EPS-Servomotor (EPS = Electric Power Steering) mit einem zusätzlichen Lenkmoment beaufschlagt, welches das von dem Fahrer aufgebrachte Lenkmoment verstärkt. Der Fahrerlenkwunsch wird dabei anhand eines Handlenkmoments $M_H$ ermittelt, das mittels eines in eine Lenkstange der Lenkung eingebrachten Torsionsstabs gemessen wird.

Zum Einstellen einer Zusatzlenkmomentanforderung $M_{DSR}$ (DSR = Driver Steering Recommendation) zur Fahrerunterstützung wird die elektrische Servolenkung genutzt, die dabei von einem Regler beispielsweise über eine Schnittstelle zum CAN-Bus des Fahrzeugs angesteuert wird. Der EPS-Servomotor dient dabei als Aktuator, der das Lenkmoment $M_{DSR}$ in den Lenkstrang einbringt.

In ähnlicher Weise kann die Erfindung jedoch auch in Fahrzeugen mit anderen Lenksystemen, wie beispielsweise Lenksystemen mit einer hydraulischen Servolenkung oder mit einer Steer-by-Wire-Lenkung eingesetzt werden.

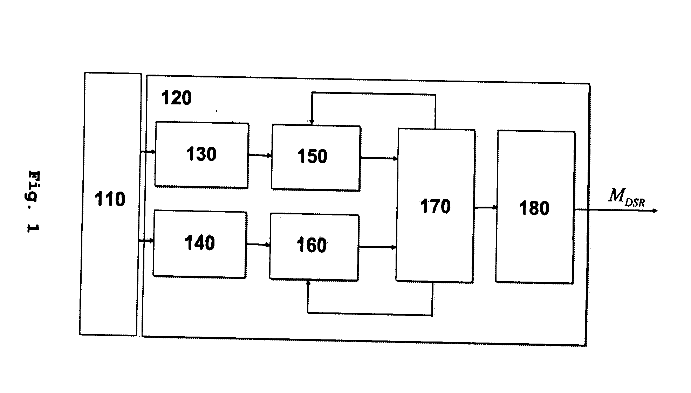

In Figur 1 ist der prinzipielle Aufbau eines Lenkstrang-Regelsystems 120 zum Ermitteln der Zusatzlenkmomentanforderung $M_{DSR}$ in einer Übersicht dargestellt. Die Funktionen umfassen eine Erkennung von Fahrsituationen in den Blöcken 130 und 140, eine der Fahrsituation angepasste Steuerung in den Blöcken 150 und 160, eine Lenkwinkelregelung in Block 170 zum Bestimmen eines Zusatzlenkmoments $\delta M$ und eine situationsabhängige Limitierung des Zusatzlenkmoments $\delta M$ in Block 180. Die Lenkmomentanforderung $M_{DSR}$ des Regelsystems 120 ergibt sich aus dem limitierten Zusatzlenkmoment $\delta M$. Das durch den EPS-Servomotor entsprechend der Lenkmomentanforderung $M_{DSR}$ in den Lenkstrang eingebrachte Lenkmoment unterstützt den Fahrer dabei, einen Solllenkwinkel $\delta_{soll}$ an den lenkbaren Rädern des Fahrzeugs einzustellen, mit dem das Fahrzeug in einer aus einem instabilen Fahrzustand stabilisiert werden kann.

Zur Erkennung von Fahrsituationen wird dabei auf von Sensoren des Fahrzeugs gemessene und auf geschätzte Fahrdynamikgrößen sowie Bremsengrößen zugegriffen, die von einer Fahrdynamikregelung 110 bereitgestellt werden, bei der es sich um eine Gierratenregelung ESP (Electronic Stability Program) und/oder um ein Antiblockiersystem (ABS) handeln kann.

Zur Erkennung eines Bremsvorgangs auf einer inhomogenen Fahrbahn, der auch als μ-Split-Bremsung bezeichnet wird, ist der Block 130 vorgesehen, der Block 150 entspricht einem Steueranteil des Regelsystems zum Bestimmen des Zusatzlenkmoments $\delta M$, das hier in Abhängigkeit des durch den Bremseingriff verursachten Störgiermoments $M_z$ ermittelt wird. Eine mögliche Erweiterung hierzu ist in den Blöcken 140 und 160 dargestellt, und bezieht sich auf Situation in denen ein Fahrzeug unter- oder übersteuert. Eine Erkennung dieser Situationen kann in dem Block 140 erfolgen und der Steueranteil 160 des Regelsystems kann hier eine angepasste Steuerung des Eingriffs vornehmen. Das Zusatzlenkmoment kann hier beispielsweise in Abhängigkeit einer Abweichung zwischen der Gierrate $\delta$ des Fahrzeugs und einer anhand eines Fahrzeugsmodells ermitteln Referenzgierrate bestimmt werden.

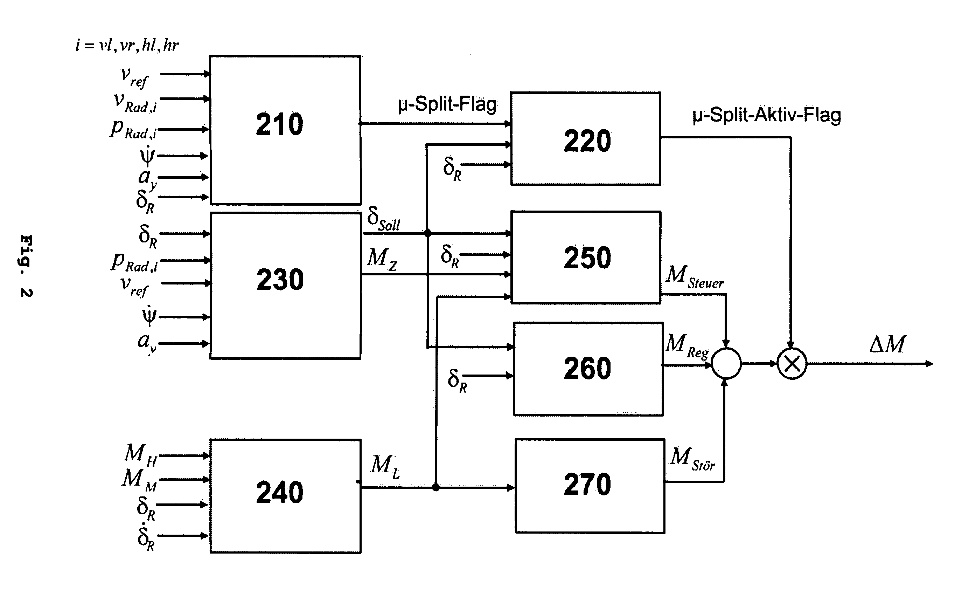

Das Blockschaltbild in der Figur 2 zeigt eine vorteilhafte Ausführungsform eines Steuer- und Regelsystems zur Lenkwinkelregelung bei einer μ-split-Bremsung. Dieses umfasst insbesondere einen Block 210 zum Erkennen einer p-split-Bremsung, einen Block 220, der eine Logikschaltung zum Aktivieren des Regelsystems enthält, einen Block 230 zum Bestimmen eines Solllenkwinkels $\delta_{soll}$, eine Block 240 zum Schätzen eines auf den Lenkstrang wirkenden Lastmoments $M_L$, einen Block 250 zur Momentenvorsteuerung, einen Lenkwinkelregler 260 sowie einen Block 270 zur Störgrößenaufschaltung.

Als Ausgangssignal wird in dem Block 210 zum Erkennen einer μ-Split-Bremsung ein μ-Split-Flag gebildet, das den Wert 1 annimmt wenn eine μ-Split-Bremsung erkannt wird. Andernfalls weist das μ-Split-Flag den Wert 0 auf.

Als Eingangssignale des Blocks 210 dienen insbesondere die Gierrate $\delta$ des Fahrzeugs, die beispielsweise mit einem Gierratensensor gemessen werden kann, die Querbeschleunigung $a_y$ des Fahrzeugs, die beispielsweise mit einem Querbeschleunigungssensor gemessen werden kann, sowie der an den lenkbaren Rädern des Fahrzeugs vorliegende Lenkwinkel $\delta_R$. Dieser kann anhand bekannt Übersetzungsverhältnisse aus dem gemessenen Lenkwinkel $\delta_L$ an der Lenksäule oder aus dem gemessenen Aussteuerungswinkel $\delta_M$ des EPS-Servomotors bestimmt werden.

Aus diesen Eingangssignalen wird dabei ermittelt, ob sich das Fahrzeug in einer Geradeausfahrt oder in einer Kurvenfahrt befindet. Eine Kurvenfahrt wird dabei beispielsweise dann erkannt, wenn Werte dieser Eingangssignale jeweils einen vorgegebenen Schwellenwert überschreiten, wobei anhand der Vorzeichen dieser Signale ermittelt werden kann, ob es sich um eine Rechts- oder um eine Linkskurve handelt. Die Erkennung einer Geradeausfahrt erfolgt entsprechend dann, wenn die Werte der genannten Eingangssignale kleiner als vorgegebene Schwellenwerte sind.

Ein Bremsvorgang auf einer inhomogenen Fahrbahn wird in dem Block 210 anhand der Referenzgeschwindigkeit $v_{ref}$ des Fahrzeugs sowie anhand von Radgeschwindigkeiten $v_{Rad,i}$ und Bremsdrücken $p_{Rad,i}$ in den Radbremsen am rechten Vorderrad ($i = vr$), am linken Vorderrad ($i = vl$), am rechten Hinterrad ($i = hr$) und am linken Hinterrad ($i = hl$) erkannt.

Insbesondere kann dabei ein Längsschlupf des Rades $i$ durch einen Vergleich der Radgeschwindigkeit $v_{Rad,i}$ und der Fahrzeugreferenzgeschwindigkeit $v_{ref}$ ermittelt werden, der angibt, in welchem Maße das Rad zum Blockieren neigt. Eine analoge Erkennung der Fahrsituation und insbesondere des Längsschlupfes eines Rades wird zur Aktivierung einer ABS-Regelung durchgeführt, die das Blockieren eines Rades durch ein Halten oder Absenken des Bremsdrucks $p_{Rad,i}$ verhindert. Zur Erkennung einer μ-Split-Situation und insbesondere zur Bestimmung des μ-Split-Flags können somit die im Folgenden beschriebenen Regeln verwendet werden. Diese beruhen dabei auch auf der eingangs bereits dargestellten ABS-Regelstrategie der Giermomentbegrenzung an der Vorderachse und des "Select-Low" an der Hinterachse.

Das μ-Split-Flag wird während einer Geradeausfahrt von dem Wert 0 auf den Wert 1 gesetzt, wenn eine der folgenden Bedingungen erfüllt ist:

a) Ein Vorderrad ist für eine vorbestimmte Zeitdauer in einer ABS-Regelung, während das andere Vorderrad nicht in der ABS-Regelung ist.
b) Beide Vorderräder sind in der ABS-Regelung und eine Differenz der Bremsdrücke $p_{Rad,i}$ an den Vorderrädern überschreitet einen vorbestimmten Schwellenwert.
c) Beide Vorderräder sind für eine vorbestimmte Zeitdauer in einer ABS-Regelung, ein ABS-Blockierdruck an wenigstens einem Vorderrad überschreitet einen vorbestimmten Schwellenwert und der ABS-Blockierdruck an einem Vorderrad beträgt ein vorbestimmtes Vielfaches des Blockierdrucks des anderen Vorderrades.

Das μ-Split-Flag wird während einer Geradeausfahrt von dem Wert 1 auf den Wert 0 gesetzt, wenn eine der folgenden Bedingungen erfüllt ist:

a) Es ist kein Vorderrad in der ABS-Regelung.
b) Der ABS-Blockierdruck an beiden Vorderrädern ist während einer vorbestimmten Zeitdauer geringer als ein vorgegebener Schwellenwert.
c) Der ABS-Blockierdruck eines Vorderrades beträgt weniger als ein vorbestimmtes Vielfaches des ABS-Blockierdrucks des anderen Vorderrades.

Während einer Kurvenfahrt wird das μ-Split-Flag von dem Wert 0 auf den Wert 1 gesetzt, wenn eine der folgenden Bedingungen erfüllt ist:

a) Das kurvenäußere Rad kommt zeitlich vor dem kurveninneren Rad in eine ABS-Regelung.
b) Beide Vorderräder sind für eine vorbestimmte Zeitdauer in der ABS-Regelung und mindestens ein Vorderrad weist einen ABS-Blockierdruck auf, der einen vorbestimmten Schwellenwert überschreitet, und der ABS-Blockierdruck am kurveninneren Vorderrad beträgt wenigstens ein vorbestimmtes Vielfaches des ABS-Blockierdrucks des kurvenäußeren Vorderrades.

Das μ-Split-Flag wird während einer Kurvenfahrt von dem Wert 1 auf den Wert 0 gesetzt, wenn eine der folgenden Bedingungen erfüllt ist:

a) Es ist kein Vorderrad in der ABS-Regelung.
b) Der ABS-Blockierdruck beider Vorderräder ist während einer vorbestimmten Zeitdauer geringer als ein vorbestimmter Schwellenwert.
c) Der ABS-Blockierdruck an dem kurveninneren Vorderrad ist geringer als ein vorgegebenes Vielfaches des ABS-Blockierdrucks an dem kurvenäußeren Vorderrad.

Das μ-Split-Flag dient als Eingangssignal für den Block 220, der die Aktivierungslogik für das Regelsystem enthält.

Bei einem Zündungsneustart wird ein μ-Split-Aktiv-Flag, welches das Ausgangssignal des Blocks 220 darstellt, auf den Wert 0 gesetzt. Eine Änderung auf den Wert 1 wird insbesondere dann vorgenommen, wenn das μ-Split-Flag den Wert 1 angenommen hat.

Vorzugsweise müssen jedoch ebenfalls eine oder mehrere zusätzliche Bedingungen erfüllt sein, damit das μ-Split-Aktiv-Flag den Wert 1 annimmt. Derartige Bedingungen werden beispielsweise ebenfalls zur Aktivierung einer ABS-Regelung oder einer Giermomentkompensation durch ein ESP-System in einer μ-Split-Situation untersucht.

Beispielsweise wird das μ-Split-Flag dann auf den Wert 1 gesetzt, wenn zusätzlich eine Differenz des Reibwertes für rechts- und linksseitige Räder, die in einem ABS-Regler geschätzt wird, einen vorgegebenen Schwellenwert überschreitet und/oder wenn die Abweichung zwischen dem Lenkwinkel $\delta_R$ und dem berechneten Solllenkwinkel $\delta_{soll}$ einen vorgegeben Schwellenwert überschreitet. Ferner können die Ergebnisse einer Fahrsituationserkennung, die in einem ABS- und/oder ESP-System durchgeführt wird, in der Aktivierungslogik berücksichtigt werden.

Das μ-Split-Aktiv-Flag wird von dem Wert 1 auf den Wert 0 zurückgesetzt, wenn das μ-Split-Flag den Wert 0 annimmt bzw. eine oder mehrere der übrigen berücksichtigten Bedingungen nicht mehr erfüllt sind. Bei Bedingungen denen ein Vergleich einer Größe mit einem Schwellenwert zugrunde liegt, werden dabei vorzugsweise andere Schwellenwert verwendet als bei der Aktivierung zuvor, so dass die Regelung durch eine Hysterese beruhigt wird.

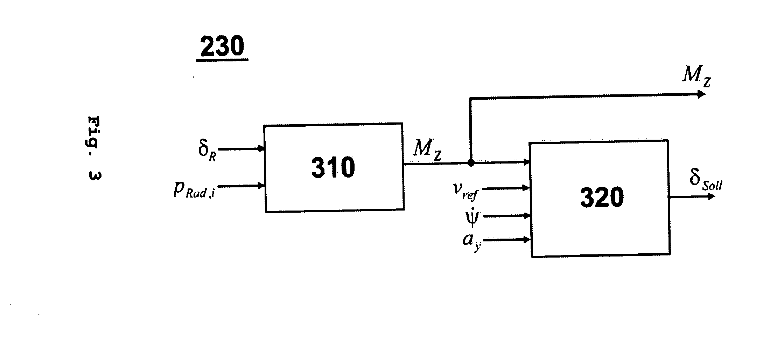

Die Bestimmung des Solllenkwinkels $\delta_{soll}$ erfolgt in dem Block 230, dessen Eingangssignale der Lenkwinkel $\delta_R$ an den lenkbaren Rädern des Fahrzeugs, die Bremsdrücke $p_{Rad,i}$ an den Radbremsen sowie die Referenzgeschwindigkeit $v_{ref}$, die Gierrate $\dot{\delta}$ und die Querbeschleunigung $a_y$ des Fahrzeugs sind. Eine bevorzugte Ausführungsform dieses Blocks ist in der Figur 3 als Blockschaltbild dargestellt.

In dem Block 310 wird ein Störgiermoment $M_z$ geschätzt, das durch die unterschiedlichen Bremskräfte $Fx_{,i}$ ($i$ = vr, vl, hr, hl) an den Rädern des Fahrzeugs in einer $\mu$-Split-Situation bewirkt wird.

Aus einer Gleichgewichtsbedingung für Drehmomente um die Hochachse des Fahrzeugs ergibt sich dabei:

$$M_z = \cos(\delta_R) \cdot \{s_l \cdot F_{x,vl} - s_r \cdot F_{x,vr}\} - \sin(\delta_R) \cdot l_v \cdot \{F_{x,hl} - F_{x,hr}\} + s_l \cdot F_{x,hl} - s_r \cdot F_{x,hr} \tag{1}$$

Hierbei bezeichnet $s_l$ den Abstand zwischen dem Schwerpunkt des Fahrzeugs und dem linken Radaufstandspunkt in Fahrzeugquerrichtung, $s_r$ den Abstand zwischen dem Schwerpunkt des Fahrzeugs und dem rechten Radaufstandspunkt in Fahrzeugquerrichtung und $l_v$ den Abstand zwischen dem Schwerpunkt des Fahrzeugs und der Vorderachse in Fahrzeuglängsrichtung.

In einer vorteilhaften Ausführungsform der Erfindung wird ein Blockieren der Räder des Fahrzeugs durch eine ABS-Regelung verhindert. Es kann somit von einem linearen Zusammenhang zwischen den Bremskräften $F_{x,i}$ an den Rädern und den Bremsdrücken $p_{Rad,i}$ in den Radbremsen ausgegangen werden, so dass die Bremskräfte $F_{x,i}$ anhand der folgenden Beziehung bestimmt werden:

$$F_{x,i} = K_{pi} \cdot p_{Rad,i} \quad (i = vr, \ vl, \ hr, \ hl) \tag{2}$$

Die Proportionalitätskonstanten $K_{pi}$ werden dabei beispielsweise in Fahrversuchen bestimmt und in dem Block 310 gespeichert.

Anhand des Störgiermoments $M_z$, welches von dem Block 310 an den Block 320 übergeben wird, wird ein erster Anteil $\delta_{soll,1}$ des Solllenkwinkels $\delta_{soll}$ in einem inversen Fahrzeugmodell bestimmt, wobei vorzugsweise ein lineares Einspurmodell zugrunde gelegt wird. Dabei wird der Zusammenhang zwischen Störgiermoment $M_z$ und Lenkwinkel für einen stationären Fahrzustand linearisiert.

Der ersten Solllenkwinkelanteil $\delta_{soll,1}$ wird daher durch eine Multiplikation des Störgiermoments $M_z$ mit einem geeigneten verstärkungsfaktor $K_M$ ermittelt:

$$\delta_{Soll,1} = K_M \cdot M_z \tag{3}$$

Es hat sich dabei gezeigt, dass der Zusammenhang in Gleichung 3 Abhängigkeiten von der Fahrzeuggeschwindigkeit $v_{ref}$ und den Bremsdrücken $p_{Rad,i}$ aufweist. Infolgedessen wird der Verstärkungsfaktor $K_M$ in Abhängigkeit dieser Größen, beispielsweise anhand von Kennlinien bestimmt, die in Fahrversuchen ermittelt werden.

Es hat sich ferner gezeigt, dass die Bremsdrücke $p_{Rad,hr}$ und $p_{Rad,hl}$ in den Radbremsen der Hinterachse nur einen geringen Einfluss haben. Ferner können die Bremsdrücke $p_{rad,vr}$ und $p_{Rad,vl}$ in den Radbremsen der Vorderachse zusammengefasst werden. In einer bevorzugten Ausführungsform des Blocks 320 wird der Solllenkwinkelanteil $\delta_{soll,1}$ daher anhand einer Beziehung der folgenden Form bestimmt:

$$\delta_{Soll,1} = K_M(v_{ref}, \{p_{Rad,vl} + p_{Rad,vr}\} / 2) \cdot M_z \tag{4}$$

Insbesondere aufgrund von wechselnden Betriebsbedingungen der Fahrzeugbremsen, wie wechselnden Betriebstemperaturen oder fortschreitender Abnutzung der Bremsbeläge, oder aufgrund von Ungenauigkeiten in der Bestimmung der Bremsdrücke $p_{Rad,i}$ in den Radbremsen, könnte es zu fehlerhaften Berechnungen des Solllenkwinkels $\delta_{soll}$ kommen, wenn nur der anhand von Gleichung 4 ermittelte Solllenkwinkelanteil $\delta_{soll,1}$ berücksichtigt werden würde.

Daher ist es vorgesehen, einen zweiten Solllenkwinkelanteil $\delta_{soll,2}$ zu bestimmen, in dem die tatsächliche Reaktion des Fahrzeugs auf Lenkbewegungen des Fahrers berücksichtigt wird. Es hat sich dabei gezeigt, dass das Fahrzeug besonders wirkungsvoll stabilisiert werden kann, wenn der zweite Solllenkwinkelanteil $\delta_{soll,2}$ aus einer Abweichung eines Gierwinkels $\psi$ des Fahrzeugs von einem vorgegebenen Schwellenwert $\delta_{th}$ ermittelt wird.

Die Bestimmung des Gierwinkels $\delta$ erfolgt in einer zweckmäßigen Ausführungsform der Erfindung durch eine Integration der gemessenen Gierrate $\dot{\delta}$, die unter der Bedingung vorgenommen wird, dass das Fahrzeug geradeaus fährt. Damit kann der Integration ein Anfangswert von $\delta_0 = 0$ für den Gierwinkel $\delta$ zugrunde gelegt werden.

In dem Block 320 wird dabei durch einen fortwährenden Vergleich der Eingangssignale $\delta_R$, $a_y$ und $\dot{\delta}$ mit zugehörigen Schwellenwerten während einer Zeitdauer $\Delta t_{Vorgeschichte}$ vor dem Beginn des Bremsvorgangs zum Zeitpunkt $t_0$ überprüft, ob dass Fahrzeug geradeaus fährt.

In einer bevorzugten Realisierung, in der von einem Rechenzyklus der Länge $\Delta t_{Loop}$ ausgegangen wird, ist es dabei vorgesehen, dass die Integration der Gierrate $\dot{\delta}$ mit dem Anfangswert $\psi_0 = 0$ durchgeführt wird, wenn für eine vorbestimmte Anzahl $n = \Delta t_{Vorgeschichte}/\Delta t_{Loop}$ von Rechenzyklen vor dem Beginn des Bremsvorgangs zum Zeitpunkt $t_0$ die Bedingungen

$$|\delta_R| < \delta_0, \quad |a_y| < a_0 \quad \text{und} \quad |\dot{\delta}| < \dot{\delta}_0$$

erfüllt sind, wobei $\delta_0$, $a_0$ und $\dot{\delta}_0$ vorgegebene Schwellenwerte sind.

Der Gierwinkel $\delta$ wird im k-ten Rechenzyklus ab dem Beginn des Bremsvorgangs in dem Block 320 mittels der Beziehung

$$\delta_{k+1} = \dot{\delta}_k \cdot \Delta t_{loop} + \delta_k \qquad\qquad (5)$$

berechnet. Es kann jedoch gleichfalls ein anderes, dem Flachmann bekanntes Integrationsverfahren angewendet werden.

Der zweite Solllenkwinkelanteil $\delta_{Soll,2}$ wird vorzugsweise berücksichtigt, wenn der Betrag des anhand der Gleichung 5 ermittelten Gierwinkels $\delta$ einen vorbestimmten Schwellenwert $\delta_{th}$ überschreitet. Er ergibt sich in einer vorteilhaften Ausführungsform der Erfindung aus der Abweichung zwischen dem Gierwinkel $\delta$ und dem Schwellenwert $\delta_{th}$ und einem geeignet gewählten Verstärkungsfaktor $K\mu$, der beispielsweise in Fahrversuchen ermittelt wird:

$$\delta_{Soll,2} = \begin{cases} -K_\delta \cdot (\delta - \delta_{th}), & \delta > \delta_{th} \\ -K_\delta \cdot (\delta + \delta_{th}), & \delta < -\delta_{th} \\ 0 & sonst \end{cases} \qquad (6)$$

Der Solllenkwinkel $\delta_{soll}$ ergibt sich bei einer $\mu$-Split-Bremsung während einer Geradeausfahrt vorzugsweise als Summe der beiden Solllenkwinkelanteile $\delta_{soll,1}$ und $\delta_{soll,2}$:

$$\delta_{Soll} = \delta_{Soll,1} + \delta_{Soll,2} \qquad\qquad (7)$$

Bei einer $\mu$-Split-Bremsung während einer Kurvenfahrt ist es vorzugsweise vorgesehen, den zweiten Solllenkwinkelanteil $\delta_{soll,2}$ nicht zu berücksichtigen, der unter den Bedingungen einer Bremsung während einer Geradeausfahrt bestimmt wird.

Ferner kann der Lenkwinkel, der von dem Fahrer bei einer $\mu$-Split-Bremsung während einer Kurvenfahrt einzustellende Solllenkwinkel $\delta_{soll,Kurve}$ in einen ersten Anteil zur Kompensation des Störgiermoments $M_z$ und einen zweiten Anteil $\delta_{Kurs}$ aufgeteilt werden, der dem eigentlichen Kurslenkwinkel entspricht.

Der Kurslenkwinkel kann in der betrachteten Situation jedoch nicht gemessen werden, sondern wird in einem Fahrzeugmodell ermittelt. Vorzugsweise wird hier wiederum das lineare Einspurmodell zugrunde gelegt, in dem bei einer stationären Kurvenfahrt folgender Zusammenhang gilt, bei dem $EG$ den Eigenlenkgradienten bezeichnet:

$$\delta_{Kurs} = \left( \frac{1}{v_{ref}^2} + EG \right) a_y \qquad (8)$$

Entsprechend dieser Gleichung wird der Kurslenkwinkel $\delta_{kurs}$ in dem Block 320 aus den Eingangssignalen $V_{ref}$ und $a_y$ bestimmt.

Dabei hat es sich gezeigt, dass es bei einer fortwährenden Berechnung des Kurslenkwinkel $\delta_{Kurs}$ während des Bremsvorgangs zu Ungenauigkeiten kommen kann, die insbesondere auf eine Beeinflussung der Querbeschleunigung $a_y$ durch den Bremseingriff zurückzuführen sind.

Als vorteilhaft hat es sich daher erwiesen, den Kurslenkwinkel $\delta_{Kurs}(t_0)$ bei der Bestimmung des Solllenkwinkels $\delta_{Soll,Kurve}$ zugrunde zu legen, der beim Beginn des Bremsvorgangs zum Zeitpunkt $t_0$ vorliegt.

Die Lenkwinkelregelung kann damit in einer Kurve jedoch nur für eine begrenzte Zeitdauer durchgeführt werden, in der keine signifikante Änderung des von dem Fahrer gewünschten Kurslenkwinkels zu erwarten ist.

Als Solllenkwinkelanteil zur Kompensation des durch die unterschiedlichen Bremskräfte während des Bremsvorgangs verursachten Störgiermoments $M_z$ kann auch für eine µ-Split-Bremsung während einer Kurvenfahrt der Solllenkwinkelanteil $\delta_{Soll,1}$ verwendet werden, der in der vorbeschriebenen Weise in dem Block 320 ermittelt wird.

Der bei einem Bremsvorgang während einer Kurvenfahrt ermittelte Solllenkwinkel $\delta_{soll,Kurve}$ setzt sich additiv aus dem Solllenkwinkelanteil $\delta_{Soll,1}$ und dem Kurslenkwinkel $\delta_{Kurs}$ zum Zeitpunkt $t_0$ zusammen:

$$\delta_{Soll,Kurve} = \delta_{Kurs}(t_0) + \delta_{Soll,1} \qquad (9)$$

Der in dem Block 230 in der vorbeschriebenen Weise ermittelte situationsabhängige Solllenkwinkel $\delta_{Soll}$ bzw. $\delta_{Soll,Kurve}$ wird an die Aktivierungslogik in Block 220, an den Block 250 zur Momentenvorsteuerung und an den Lenkwinkelregler 260 übergeben.

Der Block 240 in Figur 2 dient zur Schätzung des Lastmoments $M_L$, das den Lenkbewegungen des Fahrzeugbedieners entgegenwirkt und mit dem ein von der Seitenführungskraft und von Querkräften am Reifen verursachtes Reifenrückstellmoment berücksichtigt wird. Anhand des Lastmoments $M_L$ können somit die vorliegende Fahrbahnbeschaffenheit und insbesondere der momentane Fahrbahnbelag in dem Regelsystem berücksichtigt werden. So kann beispielsweise bei einer Bremsung auf Eis ein kleineres Lenkmoment $M_{DSR}$ eingestellt werden als bei einer Bremsung auf Asphalt.

Eine bevorzugte Ausgestaltung des Blocks 240 ist in der Figur als Blockschaltbild dargestellt.

Das Lastmoment $M_L$ wird dabei aus dem Handmoment $M_H$, dem Motormoment $M_M$ des EPS-Servomotors, sowie aus dem auf die Lenksäule bezogenen von dem Fahrer eingestellten Lenkwinkel $\delta_L$ sowie dessen Änderungsrate $\dot{\delta}_L$ bestimmt. Das Handlenkmoment $M_H$ wird dabei, wie zuvor bereits erläutert, an der Lenkstange gemessen. Das Motormoment $M_M$ des EPS-Servomotors wird gemessen oder aus einer Betriebsgröße des Motors, wie beispielsweise dem Motorstrom, bestimmt. Es kann ebenso auch das Motorsollmoment, welches von der EPS-Steuereinheit gebildet wird, verwendet werden, wenn sichergestellt ist, dass diese Größe ausreichend genau und dynamisch von der EPS-Anlage eingestellt wird.

Zur Umrechung der Größen auf einen gemeinsamen Bezugspunkt innerhalb des Lenkstrangs werden die Übersetzung $i_L = \delta_L/\delta_R$ zwischen dem auf die Lenksäule bezogenen Lenkwinkel $\delta_L$ und dem auf die lenkbaren Räder bezogenen Lenkwinkel $\delta_R$ und die Übersetzung $iM = \delta_M/\delta_R$ zwischen dem Aussteuerungswinkel $\delta_M$ der Welle des EPS-Servomotors und dem Lenkwinkel $\delta_R$ an den lenkbaren Rädern verwendet, wobei im Folgenden von einer Auswertung in Bezug auf die Lenksäule ausgegangen wird.

Die Bestimmung des Lastmoments $M_L$ entspricht einer Ermittlung durch einen so genannten Störgrößenbeobachter. Ein Modell des Lenkstrangs wird dabei durch die folgende Gleichung beschrieben:

$$\ddot{\delta}_L = \frac{(M_M \cdot i_M / i_L + M_H - M_I - M_L)}{J} \qquad (10)$$

Hierbei bezeichnet $\ddot{\delta}_L$ eine geschätzte Lenkwinkelbeschleunigung und $J$ das Trägheitsmoment des Lenkstrangs.

Das Handmoment $M_H$ und das Motormoment $M_M$ *des* EPS-Servomotors wirken entsprechend der Modellgleichung 10 in die gleiche Richtung, zu diesen entgegengesetzt wirken ein inneres Lenkmoment $M_I$ und das Lastmoment $M_L$.

Durch das innere Lenkmoment $M_I$ werden durch viskose (Stoke'-sche) und Coulomb'sche Reibung innerhalb des Lenkstrangs verursachte Momente, die durch ein Gleiten auf geschmierten und trockenen Kontaktflächen entstehen, und mit einer Auslenkung einhergehende Rückstellmomente (Federwirkung) berücksichtigt, so dass ein Ausdruck der folgenden Form zugrunde gelegt wird:

$$M_I = K_S \cdot \dot{\hat{\delta}}_L + K_C \cdot sign(\dot{\hat{\delta}}_{LS}) + K_F \cdot \hat{\delta}_L \qquad (11)$$

Die Konstanten $K_S$, $K_C$ und $K_F$ werden dabei in Fahrversuchen ermittelt.

Die geschätzte Lenkwinkelgeschwindigkeit $\dot{\delta}_L$ sowie der geschätzte Lenkwinkel $\hat{\delta}_L$ werden durch Integration aus der geschätzten Lenkwinkelbeschleunigung $\ddot{\delta}_L$, bestimmt:

$$\dot{\hat{\delta}}_L = \int \ddot{\hat{\delta}}_L dt \ \ und \ \ \hat{\delta}_L = \int \dot{\hat{\delta}}_L dt \qquad (12)$$

Ein Schätzwert für das Lastmoment $M_L$, der zum Eingang des Störgrößenbeobachters rückgekoppelt wird, ergibt sich aus der Differenz zwischen der geschätzten Lenkwinkelgeschwindigkeit $\dot{\delta}_L$ und der gemessenen Lenkwinkelgeschwindigkeit $\dot{\delta}_L$ sowie der Differenz zwischen dem geschätzten Lenkwinkel $\hat{\delta}_L$ und dem gemessenen Lenkwinkel $\delta_L$:

$$M_L = h_1 \cdot (\dot{\hat{\delta}}_L - \dot{\delta}_L) + h_2 \cdot (\hat{\delta}_L - \delta_L) \qquad (13)$$

Die Verstärkungsfaktoren $h_1$ und $h_2$ werden dabei in Fahrversuchen bestimmt, so dass das System insbesondere stabil ist und hinreichend genaue Werte für das Lastlenkmoment $M_L$ bestimmt werden können.

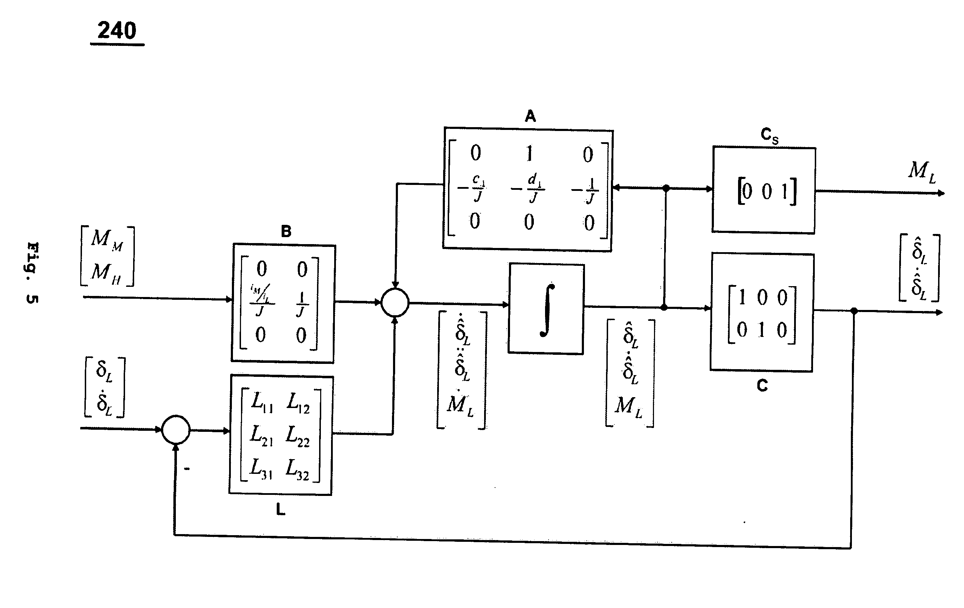

Eine weitere bevorzugte Ausgestaltung des Blocks 240 zur Lastmomentschätzung ist in der Figur 5 dargestellt. Hier wird ein lineares Modell des Lenkstrangs verwendet, in dem der nichtlineare Term des vorbeschriebenen Modells, der sich auf die Coulomb'sche Reibung innerhalb des Lenkstrangs bezieht, nicht berücksichtigt wird.

Das innere Lenkmoment $M_I$ hat in diesem Modell somit die Form:

$$M_I = c_1 \hat{\delta}_L + d_1 \dot{\hat{\delta}}_L \qquad (14)$$

Die Proportionalitätskonstanten $c_1$ und $d_1$ können dabei wiederum in Fahrversuchen ermittelt werden.

Die geschätzte Lenkwinkelbeschleunigung $\ddot{\delta}_L$ wird auch in dieser Ausführungsform des Blocks 240 anhand der Modellgleichung 10 berechnet, wobei hier das in Gleichung 14 angegebene innere Lenkmoment $M_I$ zugrunde gelegt wird.

Durch eine erste Integration erhält man daraus den geschätzten Wert $\dot{\delta}_L$ für die Lenkwinkelgeschwindigkeit $\dot{\delta}_L$, eine weitere Integration liefert aus der geschätzten Lenkwinkelgeschwindigkeit $\dot{\delta}_L$, einen geschätzten Lenkwinkel $\hat{\delta}_L$.

In dem Störgrößenbeobachter in der in Figur 5 dargestellten Ausführungsform wird die zeitliche Ableitung $\dot{M}_L$ des geschätzte Lastmoment $M_L$ aus der Abweichung zwischen dem geschätzten Lenkwinkel $\hat{\delta}_L$ und dem gemessenen Lenkwinkel $\delta_L$ und aus der Abweichung zwischen der geschätzten Lenkwinkelgeschwindigkeit $\dot{\delta}_L$ und der aus den Messwerten eines Lenkwinkelsensors abgeleiteten Lenkwinkelgeschwindigkeit $\dot{\delta}_L$ ermittelt, die hier über eine Verstärkungsmatrix L zum Eingang des Störgrößenbeobachters rückgekoppelt werden. Es gilt somit:

$$\dot{M}_L = L_{31}\left(\delta_L - \hat{\delta}_L\right) + L_{32}\left(\dot{\delta}_L - \dot{\hat{\delta}}_L\right) \qquad (15)$$

Das geschätzte Lastmoment $M_L$ ergibt sich durch Integration aus dessen zeitlicher Ableitung $\dot{M}_L$.

Über die Verstärkungsmatrix L können zudem die geschätzte Lenkwinkelbeschleunigung $\ddot{\delta}_L$ und die geschätzte Lenkwinkelgeschwindigkeit $\dot{\delta}_L$, direkt anhand der Abweichungen zwischen den geschätzten Größen $\dot{\delta}_L$ sowie $\delta_L$ und den entsprechenden aus Messsignalen ermittelten Größen $\delta_L$ und $\dot{\delta}_L$ angepasst werden.

Zur Auslegung der Verstärkungen $L_{ij}$ der Verstärkungsmatrix L können Standardverfahren der Regelungstheorie verwendet werden. Sie können beispielsweise durch Polvorgabe ermittelt werden.

Durch Multiplikation mit einem Faktor $i_L$ kann das Lastmoment $M_L$, das in dem Block 240 zunächst auf die Lenkstange bezogen bestimmt wird, auf die lenkbaren Räder des Fahrzeugs bezogen werden.

Das geschätzte Lastmoment $M_L$ wird an den Block 250 zur Momentenvorsteuerung und an den Block 270 zur Störgrößenaufschaltung übergeben.

In dem Block 250 wird dabei in Abhängigkeit des Lastlenkmoments $M_L$ ein Steueranteil $M_{steuer}$ des Zusatzlenkmoments bestimmt. Dieser setzt sich vorzugsweise aus einem "direkten" Anteil $M_{steuer,o}$ und einem weiteren Anteil zusammen, der proportional zur Abweichung zwischen dem von dem Fahrer an den lenkbaren Rädern des Fahrzeugs eingestellten Lenkwinkel $\delta_R$ und dem Solllenkwinkel $\delta_{soll}$ ist, wobei bei einer μ-Split-Bremsung während einer Kurvenfahrt der Solllenkwinkel $\delta_{soll,kurve}$ zugrunde gelegt wird:

$$M_{Steuer} = M_{Steuer,0} \cdot \text{sgn}(\delta_{Soll} - \delta_R) + m_{steuer} \cdot (\delta_{Soll} - \delta_R) \qquad (16)$$

Es ist dabei vorgesehen, das Vorsteuermoment $M_{Steuer}$ zu Beginn eines Bremsvorgangs auf einer inhomogenen Fahrbahn einzustellen, um den Fahrer durch einen spürbaren Impuls auf die bestehende Gefahrensituation aufmerksam zu machen und ihm zugleich bereits einen Hinweis darauf zu geben, in welche Richtung er lenken muss, um das Fahrzeug zu stabilisieren. Durch den Faktor sgn $(\delta_{soll} - \delta_R)$ in Gleichung 16 wird dabei sichergestellt, dass der direkte Anteil des Vorsteuermoments $M_{Steuer}$ das richtige Vorzeichen aufweist.

Nach einer vorbestimmten Zeitdauer $\Delta t_{steuer}$, die mit dem Beginn des Bremsvorgangs zum Zeitpunkt $t_0$ beginnt, wird der Steueranteil $M_{Steuer}$ des Zusatzlenkmoments zurückgenommen, so dass sich folgendes zeitliches Verhalten für den Steueranteil $M_{steuer}$ ergibt:

$$M_{Steuer}(t) = \begin{cases} M_{Steuer}, & t_0 < t < t_0 + \delta t_{Steuer} \\ 0 & sonst \end{cases} \qquad (15)$$

Es hat sich ferner gezeigt, dass der Eingriff anhand des Vorsteuermoments $M_{Steuer}$ besonders komfortabel für den Fahrer vorgenommen werden kann, wenn der Wert der Faktoren $M_{Steuer,0}$ und $m_{Steuer}$ mit abnehmender Fahrzeuggeschwindigkeit $V_{ref}$ verringert und mit zunehmendem Lastmoment $M_L$ vergrößert wird. Dies entspricht einer komfortablen Anpassung des Vorsteuermoments $M_{Steuer}$ an die Fahrsituation und an den vorliegenden Reibwert der Fahrbahn.

Die Faktoren $M_{Steauer,0}$ und $m_{steuer}$ werden daher in einer bevorzugten Ausgestaltung der Erfindung in der folgenden Form gewählt:

$$M_{Steuer,0} = f(v_{ref}, M_L) = K_{M,0} + K_{M,1} \cdot (v_{M,0} - v_{ref}) + K_{M,2} \cdot M_L \qquad (16)$$

$$m_{Steuer} = f(v_{ref}, M_L) = K_{m,0} + K_{m,1} \cdot (v_{m,0} - v_{ref}) + K_{m,2} \cdot M_L \qquad (17)$$

Die Konstanten $K_{i,j}$ ($i = M,m$; $j = 1, 2, 3$) sowie die Geschwindigkeitswerte $v_{M,o}$ und $v_{m,0}$ werden dabei beispielsweise in Fahrversuchen bestimmt.

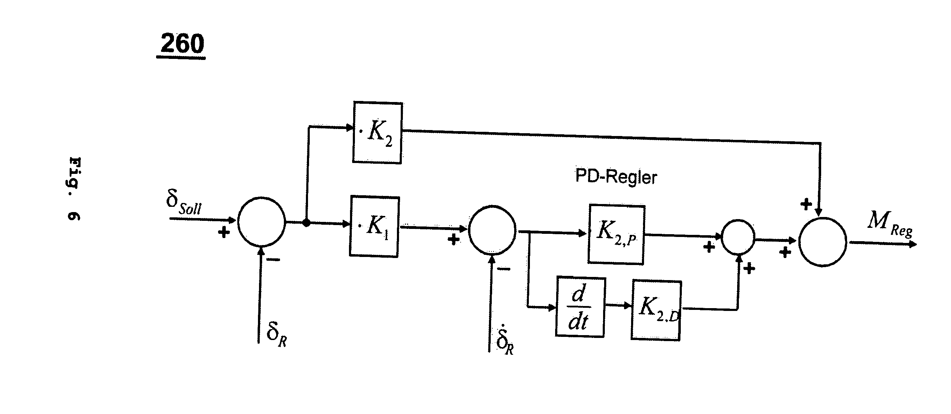

Ein Regelanteil $M_{reg}$ des Zusatzlenkmoments $\delta M$ wird durch den Regler 260 bestimmt. Ein Blockschaltbild eines vorteilhaften Reglers 260 ist in der Figur 6 dargestellt. Der Regelanteil $M_{reg}$ setzt sich in dieser Ausführungsform des Reglers 260 additiv aus einem ersten Anteil und einem zweiten Anteil zusammen.

Der erste Anteil wird durch eine Verstärkung der Regelabweichung zwischen dem Solllenkwinkel $\delta_{soll}$ und dem momentan vorliegenden Lenkwinkel $\delta_R$ an den lenkbaren Rädern des Fahrzeugs mit einem vorbestimmten Faktor $K_2$ durch einen Proportionalregler bestimmt.

Der zweite Anteil ergibt sich aus einer Regelabweichung der Lenkwinkelgeschwindigkeit $\dot{\delta}_R$ und wird in einem Zweig des Reglers 260 bestimmt, der als Kaskadenregler ausgeführt ist. Die Führungsgröße für einen inneren Regler wird dabei aus der Multiplikation der Regelabweichung $\delta_{Soll}$ - $\delta_R$ des Lenkwinkels mit einem vorbestimmten Faktor $K_1$ und entspricht einer Soll-Lenkwinkeländerung. Die Regelabweichung ergibt sich aus der Differenz $K_1(\delta_{Soll}$ - $\delta_R)$ - $\dot{\delta}_R$ zwischen der Soll-Lenkwinkeländerung und der gemessenen Lenkwinkelgeschwindigkeit $\dot{\delta}_R$.

Der innere Regler des Kaskadenreglers ist vorzugsweise als PD-Regler ausgeführt, so dass sich der zweite Anteil des Regelanteils $M_{reg}$ des Zusatzlenkmoments wie folgt ergibt:

$$K_{2,P} \cdot \left[K_1 \cdot (\delta_{Soll} - \delta_R) - \dot{\delta}_R\right] + K_{2,D} \cdot \frac{d}{dt}\left[K_1 \cdot (\delta_{Soll} - \delta_R) - \dot{\delta}_R\right] \quad (18)$$

Anhand dieses zweiten Anteils des Regelanteils $M_{reg}$ des Zusatzlenkmoments kann das Regelsystem sehr schnell und wirkungsvoll eingreifen, wenn die Differenz zwischen dem Solllenkwinkel $\delta_{soll}$ und dem momentanen Lenkwinkel $\delta_R$ durch Lenkbewegungen des Fahrers vergrößert wird. Die Verstärkungen $K_{2,F}$ und $K_{2,D}$ werden dabei in Fahrversuchen ermittelt.

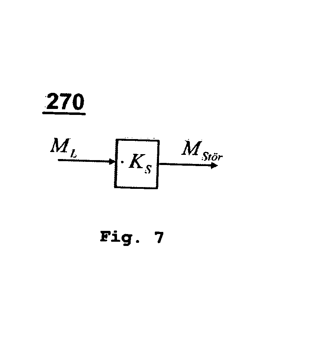

Ein weiterer Anteil $M_{Stör}$ des Zusatzlenkmoments $\delta M$ ergibt sich aus dem mit einem Faktor $K_S$ verstärkten geschätzten Lastlenkmoment $M_L$ und wird in dem Block 270 bestimmt, der in einer bevorzugten Ausführungsform in einem Blockschaltbild in der Figur 7 dargestellt ist.

Die Berücksichtigung des Anteils $M_{Stör}$ entspricht dabei einer Störgrößenaufschaltung, die es hier ermöglicht, die Fahrbahnbeschaffenheit zu berücksichtigen, die Lenkwinkelregelung jedoch in einfacher Weise unabhängig von diesem Einfluss durchführen zu können.

Zum Bestimmen des Zusatzlenkmoments $\delta M$ werden die Anteile $M_{Steuer}$, $M_{reg}$ und $M_{Stör}$ addiert. Die Summe wird ferner mit dem durch die Aktivierungslogik in Block 240 bestimmten u-Split-Aktiv-Flag multipliziert, so dass die Lenkmomentanforderung $M_{DSR}$ nur dann besteht, wenn das $\mu$-Split-Aktiv-Flag den Wert 1 aufweist.

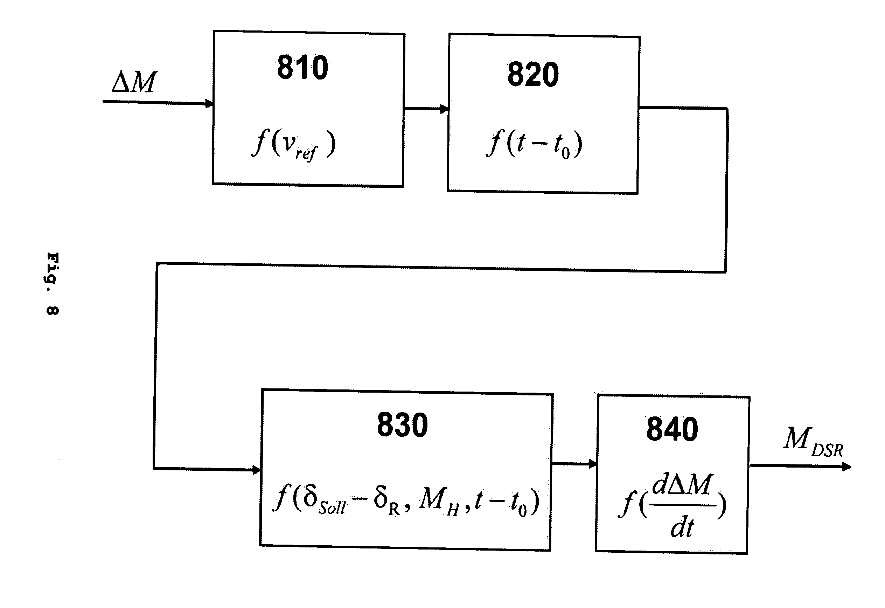

Zur Bestimmung der Lenkmomentanforderung $M_{DSR}$ ist eine Limitierung des Zusatzlenkmoments $\delta M$ vorgesehen, die in Abhängigkeit des momentanen Fahrzustands und des momentanen Fahrerverhaltens durchgeführt wird. Ein Blockschaltbild einer bevorzugten Limitierungskomponente ist in der Figur 8 dargestellt.

In dem Block 810 wird eine geschwindigkeitsabhängige Limitierung vorgenommen, wobei in einem unteren Geschwindigkeitsbereich eine stärkere Begrenzung des Zusatzlenkmoments $\delta M$ erfolgt, als in einem mittleren Geschwindigkeitsbereich. Es hat sich gezeigt, dass eine derartige geschwindigkeitsabhängige Limitierung vom Fahrer als besonders komfortabel angesehen wird. In Bereichen hoher Geschwindigkeit wird eine starke Begrenzung des Zusatzlenkmoments $\delta M$ vorgenommen, da Eingriffe hier bei einem Fehlverhalten des Fahrers zu einem erheblichen Schaden führen können;

Die Begrenzung innerhalb des Blocks 810 wird vorzugsweise anhand einer Kennlinie vorgenommen, die beispielsweise in Fahrversuchen bestimmt wird.

Der Block 820 verringert das Zusatzlenkmoment $\delta M$ mit einer größer werdenden Zeitdauer des Regeleingriffs. Hierdurch wird verhindert, dass aufgrund wachsender Fehler bei der Bestimmung der Eingangsgrößen, wie beispielsweise den Bremsdrücken $p_{Rad,i}$ oder wachsenden Schätzfehlern, beispielsweise bei der Schätzung des Kurslenkwinkels $\delta_{Kurs}$ bei einem Bremsvorgang während der Fahrt durch eine Kurve, fehlerhaft Regeleingriffe vorgenommen werden. In der Regel wird der Fahrzeugbediener dabei nach einer gewissen Zeitdauer des Eingriffs, in der er auf die Gefahrensituation aufmerksam gemacht und zur Stabilisierung des Fahrzeugs angeleitet wird, selbst in der Lage sein, die Aufgabe der Lenkwinkelregel vollständig zu übernehmen.

Ferner ist eine Limitierung vorgesehen, die das Verhalten des Fahrzeugbedieners berücksichtigt. In dem Block 830 wird dabei aus dem Handlenkmoment $M_H$ und der momentanen Regelabweichung $\delta_{Soll}$ - $\delta_R$ des Lenkwinkels ermittelt, ob der Fahrzeugbediener den Vorgaben des Regelsystems folgt, oder ob er sich ihnen widersetzt. Dabei kann durch eine zeitlich fortschreitende Betrachtung und Auswertung dieser Größen eine Größe gebildet werden, die ein Maß für das Widersetzen des Fahrers ist. Überschreitet diese Größe einen vorbestimmten Schwellenwert, wird das Zusatzlenkmoment $\delta M$ durch den Block 830 bis auf den Wert Null reduziert.

Ferner wird in dem Block 840 eine Dynamikbegrenzung durchgeführt, bei welcher der Anstieg bzw. der Abfall des Zusatzlenkmoments $\delta M$ begrenzt wird, um ein zu schnelles Aufbringen des Zusatzlenkmoments auf das Lenkrad zu verhindern. Ohne diese Begrenzung wäre es bei einer sehr hohen Dynamik des EPS-Aktuators möglich, dass dem Fahrzeugbediener das Lenkrad durch ein plötzliches Einsteuern des Zusatzlenkmoments aus der Hand geschlagen wird.

Als Ausgangssignal der in der Figur 8 dargestellten Limitierungskomponente ergibt sich ein limitiertes Zusatzlenkmoment $\delta M$, welches die Lenkmomentanforderung $M_{DSR}$ darstellt, die an den EPS-Servomotor übergeben wird. Dieser steuert das Lenkmoment $M_{DSR}$ in den Lenkstrang ein, so dass der Fahrer beim Gegenlenken in einer u-Split-Situation unterstützt wird.

Hierdurch kann der Fahrer das Fahrzeug schneller stabilisieren und es wird möglich den Bremsdruck in den Radbremsen auf der Hochreibwertseite schneller an die Fahrervorgabe anzupassen.

Durch das dargestellte Regelungssystem kann das Fahrzeug während einer $\mu$-Split-Bremsung somit zuverlässiger und schneller stabilisiert werden. Der Bremsweg des Fahrzeugs kann damit in einer solchen Situation verkürzt werden.

**Patentansprüche**

1.  Verfahren zum Unterstützen eines Fahrzeugbedieners bei einem Einstellen eines Solllenkwinkels $\delta_{Soll}$) an lenkbaren Rädern eines Fahrzeugs zur Stabilisierung des Fahrzeugs, bei dem ein Lenkstrang des Fahrzeugs mit einem Zusatzlenkmoment ($M_{DSR}$, $\Delta M$) beaufschlagt wird, das in Abhängigkeit einer Abweichung zwischen dem Solllenkwinkel ($\delta_{Soll}$) und einem momentanen Lenkwinkel ($\delta_R$, $\delta_L$) bestimmt wird,
    **dadurch gekennzeichnet,**
    **dass** ein Wert eines auf den Lenkstrang des Fahrzeugs wirkenden Lastmoments ($M_L$) als Funktion von Motormoment ($M_M$), Handmoment ($M_H$) und Lenkwinkel ($\delta_L$) geschätzt wird, und dass das Zusatzlenkmoment ($M_{DSR}$, $\Delta M$) in Abhängigkeit des geschätzten Wertes für das Lastmoment ($M_L$) ermittelt wird.

2.  Verfahren nach Anspruch 1,
    **dadurch gekennzeichnet,**
    **dass** das Zusatzlenkmoment ($M_{DSR}$, $\Delta M$) aus wenigstens zwei additiven Anteilen gebildet wird, wobei ein erster Anteil ($M_{Reg}$) in Abhängigkeit der Abweichung zwischen dem Solllenkwinkel ($\delta_{Soll}$) und dem momentanen Lenkwinkel ($\delta_R$, $\delta_L$) bestimmt wird, und wobei ein zweiter Anteil ($M_{Stör}$) in Abhängigkeit des geschätzten Wertes des Lastmoments ($M_L$) ermittelt wird.

3.  Verfahren nach einem der Ansprüche 1 und 2,
    **dadurch gekennzeichnet,**
    **dass** das Lastmoment ($M_L$) durch einen Störgrößenbeobachter geschätzt wird.

4.  Verfahren nach einem der vorangegangenen Ansprüche,
    **dadurch gekenntzeichnet,**
    dass ein Anteil ($\delta_{Soll,1}$) des Solllenkwinkels ($\delta_{Soll}$) in einem inversen Fahrzeugmodell in Abhängigkeit eines Störgiermoments ($M_z$) bestimmt wird.

5.  Verfahren nach einem der vorangegangenen Ansprüche,
    **dadurch gekennzeichnet,**
    **dass** ein Anteil ($\delta_{Soll,2}$) des Solllenkwinkels ($\delta_{Soll}$) in Abhängigkeit einer Abweichung zwischen einem Gierwinkel ($\psi$) des Fahrzeugs und einem vorbestimmten Wert ($\delta_{th}$) des Gierwinkels bestimmt wird.

6.  Verfahren nach einem der vorangegangenen Ansprüche,
    **dadurch gekennzeichnet,**
    **dass** ein Anteil des Solllenkwinkels $\delta_{Soll}$) ein geschätzter Kurslenkwinkel ($\delta_{KUTS}$) ist.

7.  Verfahren nach einem der vorangegangenen Ansprüche,
    **dadurch gekennzeichnet,**
    **dass** ein Anteil ($M_{Steuer}$) des Zusatzlenkmoments ($M_{DSR}$, $\Delta M$) einen vorbestimmten Betrag hat.

8.  Verfahren nach Anspruch 7,
    **dadurch gekennzeichnet,**
    **dass** der Anteil ($M_{Steuer}$) des Zusatzlenkmoments ($M_{DSR}$, $\Delta M$) mit dem vorbestimmten Betrag für eine vorbestimmte Zeitdauer ($\Delta t_{Steuer}$) nach dem Beginn ($t_0$) eines Bremsvorgangs eingestellt wird.

9.  Vorrichtung zum Unterstützen eines Fahrzeugbedieners bei einem Einstellen eines Solllenkwinkels ($\delta_{Soll}$) an wenigstens einem lenkbaren Rad des Fahrzeugs zur Stabilisierung des Fahrzeugs, beinhaltend ein Mittel zum Einstellen eines Zusatzlenkmoments ($M_{DSR}$, $\Delta M$), das von einer Regeleinheit (260) in Abhängigkeit einer Abweichung zwischen dem Solllenkwinkel ($\delta_{Soll}$) und einem momentanen Lenkwinkel ($\delta_R$, $\delta_L$) des Fahrzeugs bestimmt wird,
    **dadurch gekennzeichnet,**
    **dass** ein Schätzmittel (240) zum Schätzen eines auf den Lenkstrang wirkenden Lastmoments ($M_L$) aus Signalen von in den Lenkstrang eingebrachten Sensoren enthalten ist, wobei das Lastmoments ($M_L$) als Funktion von Motormoment ($M_m$), Handmoment ($M_H$) und Lenkwinkel ($\delta_L$) geschätzt wird und das Schätzmittel (240) mit einem weiteren Mittel (270) verbunden ist, das aus in dem Schätzmittel (240) ermittelten Schätzergebnissen für das Lastmoment ($M_L$) einen Anteil ($M_{Stör}$) des Zusatzlenkmoments ($M_{DSR}$, $\Delta M$) ermittelt, das durch einen Addierer zu dem durch die Regeleinheit (260) ermittelten Lenkmoment ($M_{Reg}$) addiert wird,
und wobei das Mittel zum Einstellen des Zusatzlenkmoments ($M_{DSR}$, $\Delta M$) von dem Ausgangssignal des Addierers angesteuert wird.

**10.** Vorrichtung nach Anspruch 9,
**dadurch gekennzeichnet,**
**dass** es sich bei den Sensoren wenigstens um einen Lenkwinkelsensor, um einen Sensor zum Messen eines den Fahrerlenkwunsch repräsentierenden Handlenkmoments ($M_H$) und um einen Sensor zum Messen des Zusatzlenkmoments ($M_{DSR}$, $\Delta M$) handelt.

**11.** Vorrichtung nach einem der Ansprüche 9 und 10,
**dadurch gekennzeichnet,**
**dass** das Schätzmittel (240) zum Schätzen des Lastmoments ($M_L$) als Störgrößenbeobachter ausgebildet ist.

**12.** Vorrichtung nach einem der Ansprüche 9 bis 11,
**dadurch gekennzeichnet,**
**dass** es sich bei dem Mittel zum Einstellen des Zusatzlenkmoments ($M_{DSR}$, $\Delta M$) um einen Servomotor einer elektrischen Servolenkung handelt.

**13.** Vorrichtung nach einem der Ansprüche 9 bis 12,
**dadurch gekennzeichet,**
dass es sich bei dem Mittel zum Einstellen des Zusatzlenkmoments *($M_{DSR}$, $\Delta M$)* um eine hydraulische Servolenkung handelt.

**14.** Vorrichtung nach einem der Ansprüche 9 bis 13,
**dadurch gekennzeichnet,**
**dass** es sich bei dem Mittel zum Einstellen des Zusatzlenkmoments *($M_{DSR}$, $\Delta M$)* um eine Steer-by-Wire-Lenkung handelt.

**15.** Vorrichtung nach einem der Ansprüche 9 bis 14,
**dadurch gekennzeichnet,**
**dass** ein Vorsteuermittel (250) mit dem Addierer verbunden ist, das dem Addierer für eine vorbestimmte Zeitdauer ($\Delta t_{Steuer}$) ein Zusatzlenkmoment ($M_{Steuer}$) mit einem vorbestimmten Wert übergibt.

**16.** Vorrichtung nach einem der Ansprüche 9 bis 15,
**dadurch gekennzeichnet,**
**dass** sie Erkennungsmittel (210, 220) zum Erkennen eines Fahrzustands umfasst, welche in Abhängigkeit eines erkannten Fahrzustandes ein Aktivierungssignal ($\mu$-Split-Aktiv-Flag) an einen Multiplikator übermitteln, der das Aktivierungssignal (u-Split-Aktiv-Flag) mit dem ermittelten Zusatzlenkmoment ($M_{DSR}$, $\Delta M$) multipliziert.

**17.** Vorrichtung nach einem der Ansprüche 9 bis 16,
**dadurch gekennzeichnet,**
**dass** das Aktivierungssignal ($\mu$-Split-Aktiv-Flag) den Wert 1 annimmt, wenn durch das Erkennungsmittel (210) ein Bremsvorgang auf einer inhomogenen Fahrbahn ermittelt wird.

## Claims

**1.** Method for assisting an operator of a vehicle in setting a setpoint steering angle ($\delta_{setp}$) at steerable wheels of a vehicle in order to stabilize the vehicle, in which an additional steering torque ($M_{DSR}$, $\Delta M$) is applied to a steering train of the vehicle and is determined as a function of a deviation between the setpoint steering angle ($\delta_{setp}$) and an instantaneous steering angle ($\delta_R$, $\delta_L$)
**characterized**
**in that** a value of a load torque ($M_L$) which acts on the steering train of the vehicle is estimated as a function of the motor torque ($M_M$), manual torque ($M_H$) and steering angle ($\delta_L$), and in that the additional steering torque ($M_{DSR}$, $\Delta M$) is determined as a function of the estimated value for the load torque ($M_L$).

**2.** Method according to Claim 1,
**characterized**
**in that** the additional steering torque ($M_{DSR}$, $\Delta M$) is formed from at least two additive components, wherein a first component ($M_{Reg}$) is determined as a function of the deviation between the setpoint steering angle ($\delta_{setp}$) and the instantaneous steering angle ($\delta_R$, $\delta_L$), and wherein a second component ($M_{int}$) is determined as a function of the estimated value of the load torque $(M_L)$.

**3.** Method according to either of Claims 1 and 2,
**characterized**
**in that** the load torque $(M_L)$ is estimated by an interference variable observer.

**4.** Method according to one of the preceding claims,
**characterized**
**in that** a component ($\delta_{setp,1}$) of the setpoint steering angle ($\delta_{setp}$) is determined as a function of an interference yaw torque $(M_z)$ in an inverse vehicle model.

**5.** Method according to one of the preceding claims,
**characterized**
**in that** a component ($\delta_{setp,2}$) of the setpoint steering angle ($\delta_{setp}$) is determined as a function of a deviation between a yaw angle ($\Psi$) of the vehicle and a predetermined value ($\delta_{th}$) of the yaw angle.

**6.** Method according to one of the preceding claims,
**characterized**
**in that** a component of the setpoint steering angle ($\delta_{setp}$) is an estimated course steering angle ($\delta_{course}$).

**7.** Method according to one of the preceding claims,
**characterized**
**in that** a component ($M_{cont}$) of the additional steering torque ($M_{DSR}$, $\Delta M$) has a predetermined absolute value.

**8.** Method according to Claim 7,
**characterized**
**in that** the component $(M_{cont})$ of the additional steering torque ($M_{DSR}$, $\Delta M$) with the predetermined absolute value is set for a predetermined time period ($\Delta_{cont}$) after the start ($t_0$) of a braking process.

**9.** Device for assisting an operator of a vehicle in setting a setpoint steering angle ($\delta_{setp}$) at at least one steerable wheel of the vehicle in order to stabilize the vehicle, containing a means for setting an additional steering torque ($M_{DSR}$, $\Delta M$) which is determined by a control unit (260) as a function of a deviation between the setpoint steering angle ($\delta_{setp}$) and an instantaneous steering angle ($\delta_R$, $\delta_L$) of the vehicle, **characterized**
**in that** an estimating means (240) for estimating a load torque ($M_L$), acting on the steering train, from signals of sensors which are introduced in the steering train is included, wherein the load torque $(M_L)$ is estimated as a function of the motor torque $(M_M)$, manual torque $(M_H)$ and steering angle ($\delta_L$), and the estimating means (240) is connected to a further means (270) which determines a component ($M_{int}$) of the additional steering torque ($M_{DSR}$, $\Delta M$) from estimation results for the load torque $(M_L)$ which are determined in the estimating means (240), which component ($M_{int}$) is added by an adder to the steering torque ($M_{Reg}$) which is determined by the control unit (260), and wherein the means for setting the additional steering torque ($M_{DSR}$, $\Delta M$) is actuated by the output signal of the adder.

**10.** Device according to Claim 9,
**characterized**
**in that** the sensors are at least a steering angle sensor, a sensor for measuring a manual steering torque $(M_H)$ which represents the driver's steering request, and a sensor for measuring the additional steering torque $(MDSR, \Delta M)$.

**11.** Device according to either of Claims 9 and 10,
**characterized**
**in that** the estimating means (240) for estimating the load torque $(M_L)$ is embodied as an interference variable observer.

**12.** Device according to one of Claims 9 to 11,
**characterized**
**in that** the means for setting the additional steering torque $(M_{DSR}, \Delta M)$ is a servo motor of an electric power steering system.

**13.** Device according to one of Claims 9 to 12,
**characterized**
**in that** the means for setting the additional steering torque $(M_{DSR}, \Delta M)$ is a hydraulic power steering system.

**14.** Device according to one of Claims 9 to 13,
**characterized**
**in that** the means for setting the additional steering torque $(M_{DSR}, \Delta M)$ is a steer-by-wire steering system.

**15.** Device according to one of Claims 9 to 14,
**characterized**
**in that** a pilot control means (250) is connected to the adder, which pilot control means (250) transmits an additional steering torque $(M_{DSR}, \Delta M)$ with a predetermined value to the adder for a predetermined time period $(\Delta t_{cont})$.

**16.** Device according to one of Claims 9 to 15,
**characterized**
**in that** said device comprises detection means (210, 220) for detecting a driving state, which detection means (210, 220) transmit, as a function of a detected driving state, an activation signal ($\mu$ split active flag) to a multiplier which multiplies the activation signal ($\mu$ split active flag) by the determined additional steering torque $(M_{DSR}, \Delta M)$.

**17.** Device according to one of Claims 9 to 16,
**characterized**
**in that** the activation signal ($\mu$ split active flag) assumes the value 1 if a braking process on a nonhomogeneous carriageway is determined by the detection means (210).

**Revendications**

**1.** Procédé permettant d'assister un serveur de véhicule lors d'un réglage d'un angle de braquage de consigne $(\delta_{soll})$ sur des roues directrices d'un véhicule en vue de stabiliser le véhicule, dans lequel une ligne de direction du véhicule est sollicitée avec un couple de braquage supplémentaire $(M_{DSR}, \Delta M)$, lequel est déterminé en fonction d'un écart entre l'angle de braquage de consigne $(\delta_{soll})$ et un angle de braquage $(\delta_R, \delta_L)$ momentané,
**caractérisé**
**en ce qu'**une valeur d'un couple de charge $(M_L)$ agissant sur la ligne de direction du véhicule est estimée en fonction du couple moteur $(M_M)$, du couple manuel $(M_H)$ et de l'angle de braquage $(\delta_L)$, et en ce que le couple de braquage supplémentaire $(M_{DSR}, \Delta M)$ est déterminé en fonction de la valeur estimée pour le couple de charge $(M_L)$.

**2.** Procédé selon la revendication 1,
**caractérisé en ce que**
le couple de braquage supplémentaire $(M_{DSR}, \Delta M)$ est formé d'au moins deux fractions additives, une première fraction $(M_{Reg})$ étant déterminée en fonction de l'écart entre l'angle de braquage de consigne $(\delta_{soll})$ et l'angle de braquage $(\delta_R, \delta_L)$ momentané, et une seconde fraction $(M_{Stör})$ étant déterminée en fonction de la valeur estimée du couple de charge $(M_L)$.

**3.** Procédé selon l'une des revendications 1 et 2,
**caractérisé en ce que**
le couple de charge $(M_L)$ est estimé par un observateur de grandeurs parasites.

**4.** Procédé selon l'une des revendications précédentes,
**caractérisé**
**en ce qu'**une fraction $(\delta_{soll,1})$ de l'angle de braquage de consigne $(\delta_{soll})$ est déterminée dans un modèle de véhicule inverse en fonction d'un couple de lacet parasite $(M_Z)$.

**5.** Procédé selon l'une des revendications précédentes,

**caractérisé**
**en ce qu'**une fraction ($\delta_{soll,2}$) de l'angle de braquage de consigne ($\delta_{soll}$) est déterminée en fonction d'un écart entre un angle de lacet ($\Psi$) du véhicule et une valeur prédéfinie ($\delta_{th}$) de l'angle de lacet.

6. Procédé selon l'une des revendications précédentes,
   **caractérisé**
   **en ce qu'**une fraction de l'angle de braquage de consigne ($\delta_{soll}$) est un angle de braquage de trajectoire ($\delta_{Kurs}$) estimé.

7. Procédé selon l'une des revendications précédentes,
   **caractérisé**
   **en ce qu'**une fraction ($M_{Steuer}$) du couple de braquage supplémentaire ($M_{DSR}$, $\Delta M$) a une valeur prédéfinie.

8. Procédé selon la revendication 7,
   **caractérisé en ce que**
   la fraction ($M_{Steuer}$) du couple de braquage supplémentaire ($M_{DSR}$, $\Delta M$) est réglée avec la valeur prédéfinie pour une durée ($\Delta t_{Steuer}$) prédéfinie après le démarrage ($t_0$) d'une opération de freinage.

9. Dispositif permettant d'assister un serveur de véhicule lors d'un réglage d'un angle de braquage de consigne ($\delta_{soll}$) sur au moins une roue directrice du véhicule en vue de stabiliser le véhicule, comprenant un moyen pour le réglage d'un couple de braquage supplémentaire ($M_{DSR}$, $\Delta M$), qui est déterminé par une unité de réglage (260) en fonction d'un écart entre l'angle de braquage de consigne ($\delta_{soll}$) et un angle de braquage momentané ($\delta_R$, $\delta_L$) du véhicule,
   **caractérisé**
   **en ce qu'**un moyen d'estimation (240) destiné à évaluer un couple de charge ($M_L$) agissant sur la ligne de direction à partir de signaux de capteurs introduits dans la ligne de direction est inclus, le couple de charge ($M_L$) étant estimé en fonction du couple moteur ($M_M$), du couple manuel ($M_H$) et de l'angle de braquage ($\delta_L$) et le moyen d'estimation (240) étant relié à un autre moyen (270), lequel détermine à partir de résultats d'évaluation déterminés dans le moyen d'estimation (240) pour le couple de charge ($M_L$) une fraction ($M_{Stör}$) du couple de braquage supplémentaire ($M_{DSR}$, $\Delta M$), lequel est ajouté par un additionneur au couple de braquage ($M_{Reg}$) déterminé par l'unité de réglage (260), et le moyen pour le réglage du couple de braquage supplémentaire ($M_{DSR}$, $\Delta M$) étant activé par le signal de sortie de l'additionneur.

10. Dispositif selon la revendication 9,
    **caractérisé**
    **en ce que**, en ce qui concerne les capteurs, il s'agit au moins d'un capteur d'angle de braquage, d'un capteur pour la mesure d'un couple de braquage manuel ($M_H$) représentant le souhait de braquage du conducteur et d'un capteur destiné à mesurer le couple de braquage supplémentaire ($M_{DSR}$, $\Delta M$).

11. Dispositif selon l'une des revendications 9 et 10,
    **caractérisé en ce que**
    le moyen d'estimation (240) est conçu pour l'estimation du couple de charge ($M_L$) comme observateur de grandeurs parasites.

12. Dispositif selon l'une des revendications 9 à 11,
    **caractérisé en ce que**,
    en ce qui concerne le moyen pour le réglage du couple de braquage supplémentaire ($M_{DSR}$, $\Delta M$), il s'agit d'un servomoteur d'une direction assistée électrique.

13. Dispositif selon l'une des revendications 9 à 12,
    **caractérisé en ce que**,
    en ce qui concerne le moyen pour le réglage du couple de braquage supplémentaire ($M_{DSR}$, $\Delta M$), il s'agit d'une direction assistée hydraulique.

14. Dispositif selon l'une des revendications 9 à 13,
    **caractérisé en ce que**,
    en ce qui concerne le moyen pour le réglage du couple de braquage supplémentaire ($M_{DSR}$, $\Delta M$), il s'agit d'une direction d'orientation par câbles (Steer-by-Wire).

**15.** Dispositif selon l'une des revendications 9 à 14,
**caractérisé**
**en ce qu'**un moyen pilote (250) est relié à l'additionneur, qui transmet à l'additionneur pour une durée ($\Delta t_{Steuer}$) prédéfinie un couple de braquage supplémentaire *(M$_{DSR}$, $\Delta M$)* avec une valeur prédéfinie.

**16.** Dispositif selon l'une des revendications 9 à 15,
**caractérisé**
**en ce qu'**il comprend des moyens de reconnaissance (210, 220) pour la reconnaissance d'un état de roulement, qui transmettent en fonction d'un état de roulement détecté un signal d'activation (indicateur actif $\mu$-Split) à un multiplicateur, lequel multiplie le signal d'activation (indicateur actif $\mu$-Split) par le couple de braquage supplémentaire *(M$_{DSR}$, $\Delta M$)* déterminé.

**17.** Dispositif selon l'une des revendications 9 à 16,
**caractérisé**
**en ce que** le signal d'activation (indicateur actif $\mu$-Split) prend la valeur 1 lorsqu'une opération de freinage est déterminée par le moyen de reconnaissance (210) sur une chaussée non homogène.

Fig. 1

Fig. 2

Fig. 3

**240**

Fig. 4

240

$\begin{bmatrix} M_M \\ M_H \end{bmatrix}$

$\begin{bmatrix} \delta_L \\ \dot{\delta}_L \end{bmatrix}$

**B** $\begin{bmatrix} 0 & \frac{i_M}{J} & 0 \\ 0 & 0 & \frac{1}{J} \end{bmatrix}$

**L** $\begin{bmatrix} L_{11} & L_{12} \\ L_{21} & L_{22} \\ L_{31} & L_{32} \end{bmatrix}$

**A** $\begin{bmatrix} 0 & -\frac{c_i}{J} & 0 \\ 0 & -\frac{d_i}{J} & 1 \\ 0 & -\frac{1}{J} & 0 \end{bmatrix}$

$\int$

$\begin{bmatrix} \dot{M}_L \\ \dot{\hat{\delta}}_L \\ \ddot{\hat{\delta}}_L \end{bmatrix}$

$\begin{bmatrix} M_L \\ \hat{\delta}_L \\ \dot{\hat{\delta}}_L \end{bmatrix}$

**C_S** $\begin{bmatrix} 0 & 0 & 1 \end{bmatrix}$

**C** $\begin{bmatrix} 1 & 0 & 0 \\ 0 & 1 & 0 \end{bmatrix}$

$M_L$

$\begin{bmatrix} \hat{\delta}_L \\ \dot{\hat{\delta}}_L \end{bmatrix}$

Fig. 5

260

PD-Regler

$M_{Reg}$

$K_{2,P}$

$K_{2,D}$

$\frac{d}{dt}$

$\dot{\delta}_R$

$\cdot K_2$

$\cdot K_1$

$\delta_R$

$\delta_{Soll}$

Fig. 6

**270**

$$M_L \xrightarrow{\phantom{xxx}} \boxed{\cdot K_S} \xrightarrow{\phantom{xxx}} \dot{M}_{St\ddot{o}r}$$

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1125823 A1

- WO 02074638 A1